Europäisches Patentamt

European Patent Office

Office européen des brevets

(19)

(11) Veröffentlichungsnummer: **0 015 369**
**B1**

(12)

# EUROPÄISCHE PATENTSCHRIFT

(45) Veröffentlichungstag der Patentschrift:
17.11.82

(51) Int. Cl.³: **H 01 B 7/28**, H 01 B 9/02, H 01 B 13/22

(21) Anmeldenummer: 80100279.1

(22) Anmeldetag: 21.01.80

(54) Feuchtigkeitsgeschütztes elektrisches kunststoffisoliertes Energiekabel, Verfahren zu seiner Herstellung und Vorrichtung zur Durchführung dieses Verfahrens.

(30) Priorität: 05.03.79 DE 2908454
27.09.79 DE 2939100
04.12.79 DE 2948651
04.12.79 DE 2948718

(43) Veröffentlichungstag der Anmeldung:
17.09.80 Patentblatt 80/19

(45) Bekanntmachung des Hinweises auf die Patenterteilung:
17.11.82 Patentblatt 82/46

(84) Benannte Vertragsstaaten:
AT BE CH FR GB IT NL SE

(56) Entgegenhaltungen:
DE-A-2 605 366
FR-A-2 022 603
FR-A-2 168 959
FR-A-2 407 557
FR-A-2 414 245

(73) Patentinhaber: Kabel- und Metallwerke
Gutehoffnungshütte Aktiengesellschaft,
Kabelkamp 20 Postfach 260, D-3000 Hannover 1 (DE)

(72) Erfinder: Rönisch, Wolfgang, Danziger Ring 23,
D-3001 Mellendorf (DE)
Erfinder: Klass, Joachim, Auf der Höhe 18,
3060 Stadthagen (DE)
Erfinder: Volgt, Hermann-Uwe, Dr. rer. nat., Steimbker
Hof 11, D-3000 Hannover (DE)
Erfinder: Hanisch, Ferdinand, Dr. rer. nat.,
Gorch-Fock-Weg 40, D-3006 Burgwedel 1 (DE)
Erfinder: van Hove, Cornelius, Dipl.-Ing., Hoher Kamp 30,
D-3012 Langenhagen (DE)
Erfinder: Matzat, Horst, Immenweg 6,
D-3008 Garbsen 4 (DE)

(74) Vertreter: Mende, Eberhard, Dipl.-Ing.,
Kabelkamp 20 Postfach 260, D-3000 Hannover 1 (DE)

BUNDESDRUCKEREI BERLIN

## Feuchtigkeitsgeschütztes elektrisches kunststoffisoliertes Energiekabel, Verfahren zu seiner Herstellung und Vorrichtung zur Durchführung dieses Verfahrens

Die vorliegende Erfindung betrifft ein gegen Feuchtigkeit geschütztes elektrisches kunststoffisoliertes Energiekabel, insbesondere für Hochspannung, mit einer die Isolierung und eine darüber befindliche äußere Leitschicht umgebenden geschlossenen gewellten metallischen Hülle, die über Abstand zur äußeren Leitschicht haltende Elemente mit dieser in elektrischem Kontakt steht.

Elektrische Energiekabel, die für Mittel- oder Hochspannungsbetrieb ausgelegt sind, weisen in der Regel einen metallischen Schirm in ihrem Schichtenaufbau auf, welcher auf der über der Kunststoffisolierung angeordneten äußeren Leitschicht angebracht ist und, z. B. aus aufgelegten Drähten oder Metallbändern, vorzugsweise aus Kupfer besteht. Dieser metallische Schirm, der an sich aus elektrischen Gründen vorgesehen ist, kann aber auch, wie bereits bekannt (DE-A-1 540 430), gleichzeitig zur feuchtigkeitsdichten Hülle für die darunter befindliche Isolierung verwendet werden. Hierbei besteht die metallische Hülle aus einem längseinlaufenden, um die Kunststoffisolierung des Leiters herumgefalteten Metallband, vorzugsweise aus Kupfer, dessen Kanten einander überlappen und im Bereich der Überlappungsstelle miteinander verlötet sind.

Bei dieser bekannten Möglichkeit eines feuchtigkeitsdichten Abschlusses ergeben sich jedoch Schwierigkeiten dadurch, daß sich bei Belastung des Kabels die Isolierung wesentlich stärker als die im Schichtenaufbau verwendete Metallage ausdehnt, so daß, wenn die Dehnbarkeit der an sich dichten metallischen Hülle ihre Grenzen erreicht, mit einem Aufplatzen zumindest der Schweiß- oder Lötstellen gerechnet werden muß. Hinzu kommt, daß durch das längseinlaufend aufgebrachte Metallband die geforderte Biegbarkeit solcher Kunststoffkabel beeinträchtigt wird, was sich insbesondere beim Auf- und Abtrommeln bzw. bei der Verlegung störend bemerkbar macht.

Als weitere Schwierigkeit kommt hinzu, daß bei einer Beschädigung der äußeren metallischen Hülle eindringende Feuchtigkeit auch unterhalb des Metallbandes sich in Kabellängsrichtung ausdehnen und im Laufe der Zeit Anlaß zu Schäden in der Isolierung geben kann.

Insbesondere aus der Nachrichtenkabeltechnik bekannte Stopfverfahren, z. B. mittels bei Feuchtigkeit quellender Materialien, auch in der Starkstrom-Kabeltechnik einzusetzen, haben bisher zu keinem Erfolg geführt, insbesondere wegen der Schwierigkeiten des Einbringens z. B. quellfähigen Pulvers und der wegen der verhältnismäßig großen Zwischenräume notwendigen Stopfmenge.

Ausgehend von diesen bekannten Maßnahmen liegt der Erfindung die Aufgabe zugrunde, ein feuchtigkeitsgeschütztes elektrisches Energiekabel zu schaffen, das einmal trotz der im Betrieb auftretenden Wärmespiele der Isolierung seine feuchtigkeitsdichte Abschirmung beibehält und das darüber hinaus so ausgebildet ist, daß durch einen äußeren Schaden, z. B. in der Abschirmung, eingedrungene Feuchtigkeit in ihrer Wirkung auf einen eng einzugrenzenden Bereich beschränkt bleibt.

Diese Aufgabe wird gemäß der Erfindung dadurch gelöst, daß die gewellte metallische Hülle aus einem längseinlaufend zum Rohr geformten, an den Kanten verschweißten und anschließend gewellten Metallband besteht, und daß sich diese selbsttragende Hülle über die äußere Leitschicht ring- oder wendelförmig umgebende, gleichzeitig als Dichtungselemente wirkende Abstandshalter aus einem gummielastischen Material in Abständen abstützt.

Bei einem so aufgebauten Energiekabel wird die radiale Ausdehnung der Isolierung durch den gewellten Metallmantel aufgefangen, ein Aufplatzen der metallischen Hülle ist vermieden. Das gilt selbst dann, wenn aufgrund der zu übertragenden Spannung große Isolierwanddicken erforderlich sind. Darüber hinaus führen die elastischen Dichtungselemente zur einwandfreien Abschottung der Seele in Längsrichtung, eine Fortleitung gegebenenfalls eingedrungener Feuchtigkeit ist damit vermieden. Ein Feuchtigkeitseinbruch bleibt örtlich beschränkt, er kann leicht geortet und der Schaden durch Auswechseln eines Kabelteilstückes behoben werden.

Feuchtigkeitsgeschützte Energiekabel sind bereits bekannt (DE-A-2 605 366, FR-A-2 168 959), bei denen als metallische Hülle ein Well- oder Riffelband um die Kabelseele herumgefaltet ist. Die Kanten dieser Bänder überlappen einander, ohne daß eine dichte Verbindung der Bandkanten vorgenommen ist. Der Feuchtigkeitsschutz soll deshalb hierbei in Kombination mit einer unterhalb der metallischen Hülle befindlichen dichtenden Schicht erreicht werden. Die durch das Metallband gebildete Hülle ist elastisch genug, um den radialen Ausdehnungen der Isolierung des Kabels bei Temperaturerhöhung folgen zu können, ein entsprechend der Erfindung erzielter Feuchtigkeitsschutz läßt sich hiermit jedoch nicht erreichen.

Weist der Metallmantel eine parallel verlaufende Wellung auf, dann hat es sich in Weiterführung des Erfindungsgedankens als vorteilhaft erwiesen, wenn die mit der äußeren Leitschicht ringförmige Hohlräume bildenden Wellentäler der gewellten metallischen Hülle zur Aufnahme von Dichtringen dienen. Für eine Kabellänge von z. B. 2000 m und mehr ist es selbstverständlich nicht erforderlich und in der Regel auch zu aufwendig, fortlaufend Dichtringe zwischen Kabelseele und Wellmantel einzubringen. Es hat sich daher als zweckmäßig erwiesen, Dichtringe längs der Kabelseele in Abständen anzuordnen.

Eine andere vorteilhafte Ausgestaltung der Erfindung ist die, insbesondere, wenn es sich um einen Wellmantel mit wendelförmig verlaufender Wellung handelt, als Dichtelement und gleichzeitig zur Abstandshalterung zwischen metallischer Hülle und äußerer Leitschicht eine Wendel aus einem gummielastischen Werkstoff mit einer elektrischen Leitfähigkeit von mindestens $10^{-4}$ S $\cdot$ cm$^{-1}$ zu wählen. Eine solche Wendel stützt, wenn man den gesamten Querschnitt betrachtet, die Seele jeweils nur an einer Stelle des Umfangs ab, während für den restlichen Bereich eine freie Bewegung der Isolierung möglich ist, ohne daß es zu einem Anpressen der Isolierung gegen die geschlossene Hülle und damit zu erhöhten Drücken insbesondere im Bereich der Nahtstelle kommt. Damit ist jederzeit, auch z. B. bei kurzzeitig auftretenden erhöhten Kurzschlußtemperaturen, ein ausreichendes Atmen der Isolierung ohne Beschädigung der feuchtigkeitsdichten Hülle gewährleistet. Der gummielastische Charakter der erfindungsgemäßen Wendel sichert bereits bei der Herstellung einen dichten Kontakt mit der äußeren Leitschicht, verhindert ein Unterwandern durch isolierende Dichtmittel und hält die elektrische Verbindung zwischen Leitschicht und metallischer Hülle auch bei im Betrieb auftretenden Wärmespielen der Isolierung aufrecht. Die Funktionsfähigkeit des Kabels bleibt stets erhalten.

Die Verwendung von wendelförmig aufgebrachten leitfähigen Bändern, insbesondere Kupferbänder, ist in der Kabeltechnik an sich allgemein bekannt. Sie dienen z. B. dazu, die aus Einzeldrähten bestehende konzentrische Lage eines Schutz- oder Nulleiters auf der Kabelseele festzuhalten und weisen zu diesem Zweck eine Wandstärke zwischen 0,1 und 0,3 mm auf. Diese lediglich dem Zusammenhalt der Drähte und der Querleitfähigkeit dienenden Kupferbänder sind jedoch aufgrund ihrer Dicke allein schon nicht geeignet, als Abstandshalterwendel für eine darüber aufgebrachte geschlossene metallische Hülle zu dienen.

Wesentlich für die Erfindung ist dagegen, daß aufgrund der Abstandshalterwendel der Isolierung einmal die Möglichkeit einer freien Ausdehnung gegeben ist, und zum anderen der ständige leitende Kontakt zwischen äußerer Leitschicht und Hülle sichergestellt ist. Im Gegensatz zu den bekannten leitenden Wendeln beträgt in Durchführung der Erfindung die Banddicke mindestens 1,0 mm, vorzugsweise 1,5 bis 4,5 mm. Damit können erhebliche Dickenschwankungen aufgefangen und hohe Flächenpressungen auf die Leitschicht übertragen werden.

Der durch die Wendel und die darüber befindliche geschlossene metallische Hülle gebildete Raum wird in Weiterführung der Erfindung längswasserdicht gemacht. Hierzu dient z. B. ein in den freien Raum kontinuierlich oder in Abständen eingebrachter Schaum, etwa auf Polyurethanbasis, der nach dem Aufquellen oder -schäumen für eine Längswasserdichtigkeit sorgt.

Wesentlich für die Erfindung ist ferner der Werkstoff, der für die nach der Erfindung vorgesehene Wendel aus dem elastischen leitfähigen Werkstoff in Frage kommt. Zu berücksichtigen ist hierbei nämlich, daß bei ausreichender elektrischer Leitfähigkeit — sie sollte bei allen anzunehmenden Temperaturen den Wert von $10^{-4}$S $\cdot$ cm$^{-1}$ nicht unterschreiten — noch eine hohe Elastizität und hohe Ermüdungsfreiheit bei gutem Alterungsverhalten vorhanden ist. Als für diese Zwecke besonders geeignet haben sich daher Materialien auf Basis Äthylen-Propylen-Kautschuk (EPDM) oder auch chloriertem Polyäthylen (CM) in vernetzter oder unvernetzter Form erwiesen. Sie haben eine ausgeglichene Eigenschaftskombination hinsichtlich Alterung und Elastizität. Zur Erzeugung ausreichender Leitfähigkeit werden bestimmte Ruße in Kombination oder auch allein verwendet, aber auch die Kombination mit Graphit oder Graphit allein als leitende Komponente führt zu geeigneten Mischungen.

Für die Durchführung der Erfindung hat es sich weiterhin als vorteilhaft erwiesen, für die Wendel vernetzte Werkstoffe einzusetzen. Die Vernetzung kann nach den unterschiedlichsten Verfahren durchgeführt sein, so kann die Vernetzung der Wendel aus einem Werkstoff auf Basis EPDM durch peroxidische Vernetzung, etwa im Dampfrohr (CV-Technik) vorgenommen werden oder auch dadurch erfolgen, daß eine drucklose Feuchtigkeitsvernetzung angewendet wird, indem zunächst auf die Moleküle der Basismaterialien Organosilane aufgepfropft werden, die bei der späteren Lagerung, z. B. im Wasserdampf, den Vernetzungsmechanismus bewirken (Siloxantechnik). Das gleiche gilt für den Fall, daß als Basismaterial ein chloriertes Polyäthylen eingesetzt wird.

Als Materialien für die Dichtringe sind beliebige geeignet, sofern sie gummielastisch sind. Diese Eigenschaft sichert die notwendige Flexibilität bei den im Betrieb des Kabels auftretenden Wärmespielen, es bietet aber auch die Gewähr, daß bei der Herstellung der metallischen Hülle, insbesondere beim Wellvorgang, die elastischen Ringe sich selbsttätig in die lagerichtige Position bringen.

Als für die Zwecke der Erfindung besonders geeignete Materialien haben sich erwiesen solche auf Basis Acrylnitrilbutadien-Kautschuk in vernetzter oder unvernetzter Form, wobei, wenn zusätzlich eine erhöhte Wärmestandfestigkeit erwartet wird, es sich empfiehlt, vernetzte gummielastische Materialien einzusetzen.

Die Dichtringe befinden sich in einem ringförmigen Hohlraum, der einerseits von dem gewellten metallischen Mantel und zum anderen von der Isolierung bzw. der äußeren Leitschicht des Kabels begrenzt wird. Die leitende Verbindung zwischen der äußeren Leitschicht und dem Metallmantel erfolgt über die in Richtung der Kabelseele weisenden Wellenberge. Eine zusätzliche leitfähige Verbindung kann dadurch erreicht werden, daß die gummielastischen Materialien etwa durch Zugabe von Ruß oder Graphit ganz oder teilweise leitfähig gemacht sind oder auch mit leitfähigen Materialien oberflächenbeschichtet sind.

Entsprechend der gewählten Wellform des metallischen Mantels wird man auch das Querschnittsprofil der Dichtringe wählen. Diese werden in der Regel ein kreisförmiges Querschnittsprofil aufweisen, es können aber je nach den Erfordernissen auch hiervon abweichende Profile eine vorteilhafte Anwendung finden. So kann es mitunter zweckmäßig sein, Hohlprofile einzusetzen, die gegebenenfalls mit für den Betrieb des Kabels geeigneten Zusätzen gefüllt sind. So können feuerhemmende oder lichtbogenlöschende Mittel eingebracht sein, aber auch Stabilisatoren, die mit der Zeit in die äußere Leitschicht bzw. die Isolierung eindiffundieren.

Neben der Elastizität wird von den Dichtringen aber auch gefordert, daß sie eine bestimmte Härte aufweisen, um den insbesondere beim Wellvorgang wirksamen mechanischen Kräften ausreichenden Widerstand entgegenzubringen. In Weiterführung der Erfindung hat es sich daher als zweckmäßig erwiesen, wenn die Dichtringe eine Härte von 40–80 Shore, vorzugsweise 60–70 Shore, aufweisen.

Wie bereits ausgeführt, ist es für die Durchführung der Erfindung unerläßlich, daß die Dichtringe bei der Herstellung selbsttätig ihre lagerichtige Position im Kabel einnehmen. In diesem Zusammenhang kann es oft förderlich sein, wenn die Oberfläche der Dichtringe mit einem Gleitmittel, etwa einem Öl, z. B. Silikonöl, benetzt ist. Dieses zunächst rein mechanisch wirkende Gleitmittel kann gleichzeitig aber auch elektrische Funktionen übernehmen, indem es selbst z. B. spannungsstabilisierend wirkt oder spannungsstabilisierende Zusätze enthält.

Zur Herstellung eines Kabels nach der Erfindung hat sich ein Verfahren als besonders geeignet erwiesen, bei dem unmittelbar vor der Umhüllung der Kabelseele mit dem sich zum Rohr formenden längseinlaufenden Metallband die Dichtringe auf die durchlaufende Seele in Abständen nacheinander aufgeschoben, vom Metallband umschlossen und beim an das Verschweißen der Bandkanten anschließenden Wellvorgang in die entstehenden Wellentäler eingedrückt werden.

Hierbei wird man, um eine Beschädigung des Dichtringes durch die Schweißwärme und eine Beeinflussung der Qualität der Schweißnaht durch das Material des Dichtringes zu vermeiden, so vorgehen, daß das Metallband mindestens im Bereich der vorzunehmenden Schweißnaht mit Abstand zu den Dichtringen zum Rohr geformt und nach dem Schweißen eine Kalibrierung zwecks Verminderung des Durchmessers vorgenommen wird.

Die auf die Seele aufgeschobenen Dichtringe sollen einerseits selbsttätig ihre vorgeschriebene Position einnehmen, sie sollen andererseits auf der Seele aber auch nicht so frei beweglich sein, daß sie durch das Metallband beim Rohrformvorgang beliebig mitgenommen werden können. Vorteilhaft ist es deshalb, wenn die Abmessungen der Dichtringe so gewählt sind, daß sie einen um vorzugsweise 10% geringeren Durchmesser als die Kabelseele aufweisen. Dadurch ist auch vermieden, daß die Dichtringe beim Aufbringen durch das Metallband, das eine Relativbewegung zur Kabelseele ausführt, quergezogen werden.

Des weiteren kann es oft zweckmäßig sein, die Wellung der metallischen Hülle nach der Stationierung der Dichtringe zu kalibrieren. Hierdurch ist die Gewähr gegeben, daß die Dichtringe tatsächlich überall dichtend auf der Kabelseele aufliegen. Neben der Einstellung des gewünschten Druckes des Mantels auf die Dichtringe wird gleichzeitig eine Glättung der inneren Oberfläche der metallischen Hülle erreicht.

Zur Durchführung des Verfahrens nach der Erfindung hat sich eine Vorrichtung als zweckmäßig erwiesen, die ein rohrförmiges Magazin für die Dichtringe enthält, durch das die Kabelseele hindurchgeführt wird. Nacheinander können dann je nach gewähltem Abstand der Dichtringe voneinander diese von Hand oder auch automatisch auf die durchlaufende Seele aufgeschoben werden. Um Beschädigungen der einlaufenden Kabelseele zu vermeiden, kann es von Vorteil sein, das rohrförmige Magazin einlaufseitig trompetenförmig auszuweiten.

Abweichend hiervon besteht aber auch die Möglichkeit, auf ein rohrförmiges Magazin einen Schlauch aus gummielastischem Material aufzuziehen, von dem dann entsprechend der durchlaufenden Seele taktweise Scheiben als Dichtringe abgeschnitten und auf die Kabelseele aufgeschoben werden. Für den Fall, daß die Kabelseele fertigungsbedingt über der äußeren Leitschicht z. B. nicht einwandfrei rund ist, sondern Ovalitäten im Querschnitt aufweist, ist es weiterhin vorteilhaft, die Seele vor dem Aufbringen der Dichtringe in einer oder mehreren Stufen zu kalibrieren, also in die runde Querschnittsform zu bringen.

Eine weitere Verbesserung des erfindungsgemäßen Vorschlages ist darin zu sehen, wenn die Dichtringe auf der äußeren Leitschicht durch ein- oder beidseitig angeordnete und über den Umfang der Isolierung wirkende Widerlager arretiert sind. Hierdurch ist erreicht, daß die Dichtringe auf der Kabelseele, d. h. auf der äußeren Leitschicht, festgelegt sind und damit zusammen mit dem anschließenden Wellmantel eine einwandfreie Abdichtung in Längsrichtung bewirken. Die durch die Widerlager gegebene Halterung wirkt sich nämlich bei der Fertigung insofern vorteilhaft aus, als beim Umhüllen der Kabelseele mit aus einem längseinlaufenden Band geformten Metallmantel und anschließender Wellung die Dichtringe nicht auf der Kabelseele verrutschen.

Widerlager für die Dichtringe können in Durchführung der Erfindung mit besonderem Vorteil dadurch gebildet sein, daß die äußere Leitschicht in Achsrichtung verlaufende, am Umfang verteilte Stege aufweist, die in Abständen in einer Länge unterbrochen sind, die einem Mehrfachen, vorzugsweise dem Dreifachen, der Breite der Dichtringe entspricht. Neben der erwähnten Abdichtung in Längsrichtung bewirkt hierbei das Eindrücken der Wellentäler in die Stege einen guten Kraftschluß

4

zwischen Wellmantel und äußerer Leitschicht.

Eine andere vorteilhafte Möglichkeit in der Durchführung des Erfindungsgedankens ist die, die Widerlager durch vor und/oder hinter dem Dichtring befindliche Wickel zu bilden. Diese Wickel werden zweckmäßig aus selbstverklebenden oder selbstverschweißenden Kunststoffbändern, etwa auf Basis von Polyäthylen oder Äthylen-Mischpolymerisaten, gebildet. Unter Wickel sind in diesem Zusammenhang ein oder mehrere konzentrische Bandlagen zu verstehen, die in ihrer Gesamtdicke nur einen Bruchteil der Dicke der Dichtungsringe betragen können. Wesentlich ist nur, daß die Höhe der Wickel in radialer Richtung des Kabels ausreicht, die Dichtringe an einem Verrutschen zu hindern.

Zur Herstellung eines Kabels nach der Erfindung hat es sich als vorteilhaft erwiesen, die Lücken in den Stegen durch eine gesteuerte Beeinflussung des Spritznippels vorzunehmen. Beim Aufextrudieren der äußeren Leitschicht auf die Isolierung werden gleichzeitig durch Änderung des üblichen Spritznippels mit konzentrischem Ausgang längsverlaufende Stege mit ausgeformt. Durch Öffnen und Schließen des Materialflusses für die Stege können diese fortlaufend und/oder mit Unterbrechung erzeugt werden.

Eine andere Möglichkeit ist die, wenn nach einem weiteren Erfindungsgedanken die längsverlaufenden Stege über die gesamte Kabellänge fortlaufend extrudiert werden und erst anschließend, z. B. in einem kontinuierlichen Durchlauf oder bei der Wellmantelfertigung, durch mechanisch arbeitende Schneid-, Schäl- oder Fräswerkzeuge, die über den Umfang verlaufenden Lücken in der äußeren Leitschicht zum Zwecke der Aufnahme der Dichtringe hergestellt werden. Form und Material der Dichtringe selbst sowie das Aufbringen dieser Elemente auf die Kabelseele erfolgt zweckmäßig, wie bereits beschrieben.

Werden, wie ebenfalls zur Lösung der der Erfindung zugrunde liegenden Aufgabe vorgesehen, die Widerlager durch Wickel gebildet, dann werden zu diesem Zweck vorteilhaft auf die äußere glatte Leitschicht des Kabels im Durchlauf in Abständen in einer oder mehreren Lagen selbstverschweißende oder selbstverklebende Kunststoffbänder um die Kabelseele mit in radialer Richtung zunehmendem Wickeldurchmesser herumgelegt. Vor, während oder nach dem Wickelvorgang wird man zweckmäßig eine Temperaturbehandlung der Bänder und/oder auch der äußeren Leitschicht vornehmen, um eine sichere Verklebung und Verschweißung und damit einen dichten Abschluß in Längsrichtung zu gewährleisten. In diesem Zusammenhang kann es oft von Vorteil sein, wenn die Bänder auf die noch extrusionswarme äußere Leitschicht bzw. Isolierung aufgebracht und zum Wickel geformt werden. Je nach Fertigungsbedingungen kann ein Wickel vor, hinter oder vor und hinter einem Dichtring zweckmäßig sein.

Wird, wie nach der Erfindung vorgesehen, als Dichtungselement eine Wendel aus einem gummielastischen Material verwendet, dann ist es oft von Vorteil, den zwischen den einzelnen Windungen der Wendel gebildeten Raum mit einem geeigneten Schaumstoff abzudichten. Als hierfür besonders geeignet hat sich in Weiterführung des Erfindungsgedankens zur Abdichtung ein halbhartes, überwiegend geschlossenporiges, bei freier Schäumung schrumpfendes Polyurethan-Schaumsystem in auf $100-300$ kg/m$^3$, vorzugsweise $150-250$ kg/m$^3$, verdichteter Form verwendet ist. Ein solcher Schaum ist in für den Kabelbetrieb notwendigem Maße temperaturbeständig, er haftet gut auf der äußeren Leitschicht auf der einen und der Innenfläche der metallischen Hülle auf der anderen Seite, so daß längsgerichtete, gegebenenfalls wasserführende Kanäle vermieden sind. Die Flexibilität des aufgeschäumten Werkstoffes ist so groß, daß der Schaum beim Auf- und Abtrommeln des Kabels nicht bricht und thermisch bedingte Längenänderungen des Kabels ohne weiteres aufnimmt.

Ein hierfür besonders geeigneter Schaum ergibt sich dann, wenn in Durchführung der Erfindung als Komponente A ein Reaktionsprodukt auf Basis Äthylenoxid und/oder Propylenoxid mit Verbindungen, die mindestens zwei oder drei aktive Wasserstoffatome enthalten, verwendet wird, beispielsweise Trimethylolpropan, Glycerin, Äthylendiamin u. a. Wird, wie weiterhin vorgesehen, als Komponente B ein Diphenylmethandiisocyanat eingesetzt, dann liefert ein solcher Schaum bei entsprechender Aktivierung eine lange Topfzeit, die notwendig ist, nach dem Verschweißen der Hülle und gegebenenfalls anschließender Wellung der metallischen Hülle erst den Schäumvorgang einzuleiten, und die für die Erfindung geforderte Steigfähigkeit, die ausreicht, für ein vollständiges Ausschäumen des engen Hohlraumes zwischen Seele und Hülle des Energiekabels zu sorgen.

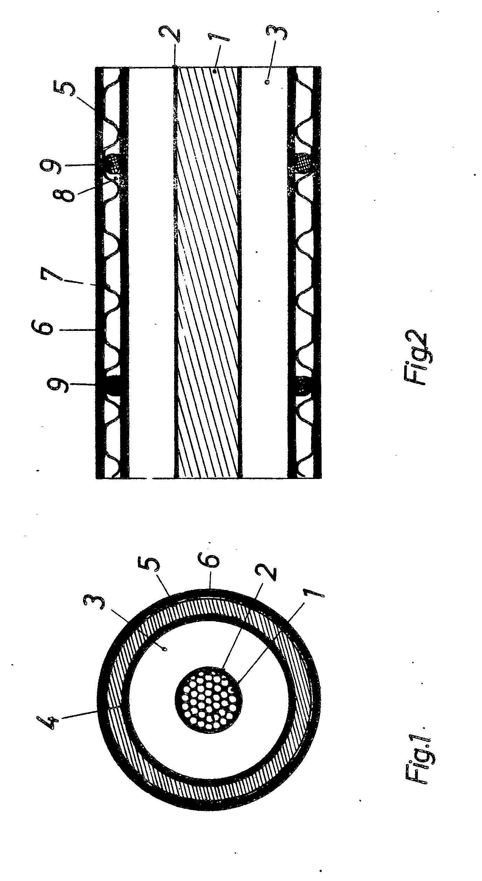

Die Erfindung sei anhand der in den Fig. 1 bis 5 dargestellten Ausführungsbeispiele näher erläutert.

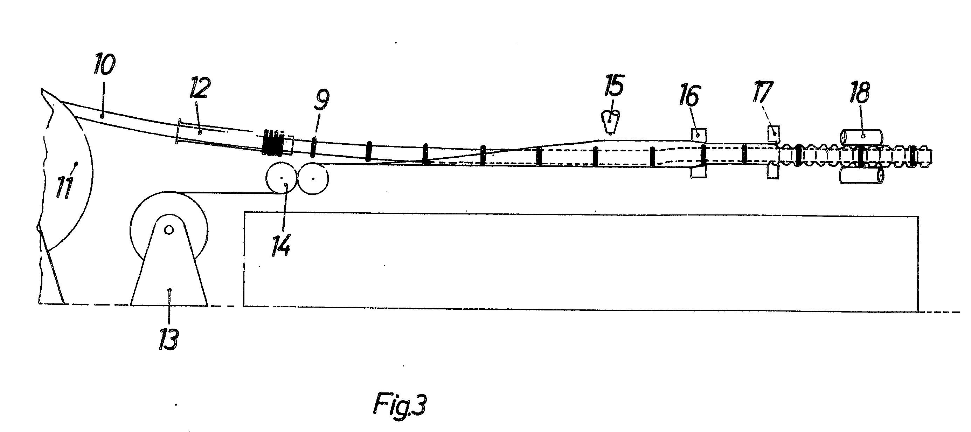

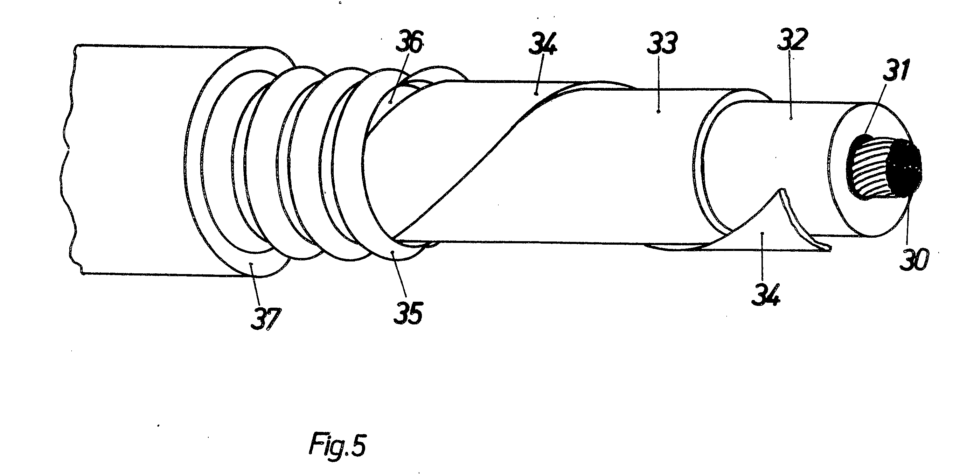

Hierbei zeigen die Fig. 1 und 2 sowie 4 und 5 in unterschiedlichen Schnitten ein kunststoffisoliertes einadriges Hochspannungskabel, während die Fig. 3 das erfindungsgemäße Verfahren zur Herstellung eines Kabels nach den Fig. 1 und 2 veranschaulicht.

Der Leiter 1 des Hochspannungskabels besteht aus einer Vielzahl miteinander verseilter Einzeldrähte. Die innere Leitschicht 2 gleicht Unebenheiten auf dem Leiterseil, die Anlaß zu Entladungen aufgrund örtlicher Feldstärkenerhöhungen sein könnten, aus. Die Isolierung aus einem vernetzten oder auch unvernetzten Polymermaterial, etwa vernetztem oder unvernetztem Polyäthylen oder auch auf der Basis Äthylen-Propylen-Kautschuken ist mit 3 bezeichnet, sie wird überdeckt von der äußeren Leitschicht 4. Als äußerer feuchtigkeitsdichter Schirm dient der gewellte, längsnahtverschweißte Metallmantel 5, der nach außen hin von einem Kunststoffmantel 6, z. B. aus Polyvinylchlorid, überdeckt ist. Je nach Verlegebedingungen befindet sich unter dem Mantel eine sogenannte Polymentspülung, d. h. ein Korrosionsschutz auf Bitumenbasis bzw. über dem Mantel eine Bewehrung.

Um nun bei einem solchen Kabel auch die Längswasserdichtigkeit für den Fall zu gewährleisten, daß nach einer Beschädigung der metallischen Hülle Feuchtigkeit eingedrungen ist, weist der Metallmantel 5 eine Parallelwellung 7 auf, wobei in dem Leiter 1 zugekehrten Wellentälern 8 Dichtringe 9 aus einem gummielastischen Material angeordnet sind. Das Material kann noch so beschaffen sein, daß es bei Wasserzutritt quillt, um die Abstopfung weiter zu verbessern.

Im dargestellten Ausführungsbeispiel drücken die Dichtringe 9 elastisch auf die äußere Leitschicht 4, so daß der Raum zwischen Metallmantel 5 und äußerer Leitschicht 4 in Längsrichtung feuchtigkeitsdicht abgeschottet ist.

Zur Herstellung eines feuchtigkeitsgeschützten Kabels nach den Fig. 1 und 2 geht man, wie in der Fig. 3 dargestellt, zweckmäßig so vor, daß die Kabelseele 10 von einer Vorratstrommel 11 abgezogen und dem als Rohr schematisch dargestellten Magazin 12 zugeführt wird. Auf diesem Magazin, das selbstverständlich auch anders ausgeführt sein kann, befinden sich eine Vielzahl der Dichtringe 9, die je nach dem gewünschten Abstand nacheinander taktweise auf die Kabelseele 10 aufgeschoben werden.

Von dem Bandvorrat 13 wird gleichzeitig ein Metallband, z. B. aus Kupfer, Aluminium oder auch aus unmagnetischem Stahl, über die Umlenkrollen 14 abgezogen und mittels an sich bekannter Formwerkzeuge um die mit den Dichtringen bestückte Kabelseele 10 zum Rohr geformt und durch die Schweißvorrichtung 15 an den Kanten gasdicht verschweißt. Wie aus dieser Figur ersichtlich, ist dabei der Durchmesser des erzeugten »Rohres« größer als der äußere Durchmesser der Dichtringe, so daß eine gegenseitige Beeinflussung von Schweißvorrichtung oder Schweißnaht und Dichtungsmaterial unterbleibt.

Nach dem Schweißvorgang erfolgt zunächst mittels des Kalibrierwerkzeugs 16 eine Querschnittsreduktion, so daß die metallische Hülle nahezu auf die Dichtringe heruntergezogen wird. Mit 17 ist die Wellvorrichtung bezeichnet, die das geschweißte Rohr mit einer Parallelwellung versieht, wobei die Dichtringe, wie angedeutet, in die Wellentäler des erzeugten Wellmantels hineinrutschen. Eine anschließende weitere Kalibrierung mittels der Rollen- oder Walzenanordnung 18 sorgt dafür, daß ein sattes Aufliegen der Dichtringe 9 sowohl an der Innenfläche der metallischen Hülle als auch an der äußeren Leitschicht des Energiekabels sichergestellt ist. Die Kalibrierung wird dabei zweckmäßig so gewählt, daß Querschnittsverformungen der Dichtungsringe von 5 – 20%, vorzugsweise von 10 – 12%, erfolgen.

Abweichend von dem Beispiel eines einadrigen Kabels kann die Erfindung selbstverständlich auch Anwendung bei mehradrigen Ausführungen finden, wobei jede Phasenausführung zweckmäßig gesondert abgedichtet wird.

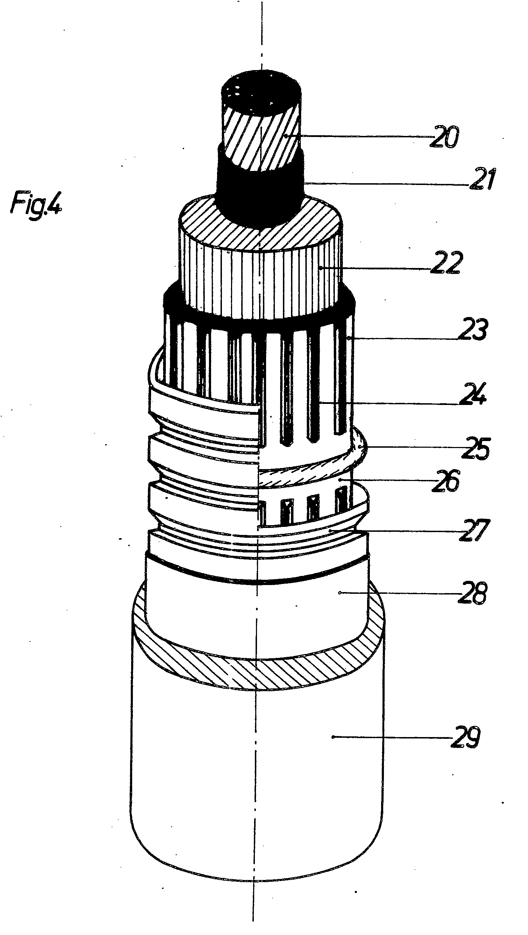

Bei dem Ausführungsbeispiel nach der Fig. 4 besteht der Leiter 20 des Hochspannungskabels ebenfalls aus einer Vielzahl miteinander verseilter Einzeldrähte, deren oberste Lage von der inneren Leitschicht 21 überdeckt ist. Diese Leitschicht 21 gleicht Unebenheiten auf dem Leiterseil aus, die Anlaß zu Entladungen aufgrund örtlicher Feldstärkenerhöhungen sein könnten. An die Leitschicht 21 schließt sich die Isolierung 22 aus einem vernetzten oder unvernetzten Polymermaterial an, sie besteht beispielsweise aus vernetztem oder unvernetztem Polyäthylen oder auch aus einem Polymermaterial auf der Basis Äthylen-Propylen-Kautschuk. Die Isolierung wird bedeckt von der äußeren Leitschicht 23 aus einem extrudierten, durch Ruß oder Graphit leitfähig gemachten Polymermaterial, die längsverlaufende Stege 24 aufweist. Diese Stege sind zweckmäßig am Umfang gleichmäßig verteilt. Um eine sichere Halterung der Dichtringe 25 zu gewährleisten, die eine Abdichtung des Kabels in Längsrichtung gewährleisten, sind jeweils in Abständen die Stege 24 unterbrochen, so daß Lücken 26 beispielsweise in einer Länge von ca. 10 mm gebildet werden. Ein Verrutschen der Dichtringe 25 aus ihrer ursprünglichen Lage ist dann nicht mehr möglich, wenn anschließend der geschlossene Metallmantel 27 aufgebracht und gewellt wird, so daß die Dichtringe 25 in die Wellentäler des Mantels eingreifen.

Der geschlossene Metallmantel, beispielsweise aus Kupfer, um gleichzeitig die Abschirmung des Kabels zu übernehmen, kann je nach Verlegebedingungen noch mit einem Korrosionsschutz 28 auf Bitumen-Basis versehen sein, bevor dann der äußere Mantel 29 aus einem Kunststoff, beispielsweise aus Polyvinylchlorid, aufgebracht wird.

Die Durchmesser von kunststoffisolierten Mittel- und Hochspannungskabel können über die Länge und über den Umfang z. T. erhebliche Schwankungen erfahren. Es ist daher erforderlich, den Metallmantel mit Parallelwellung mit seinem Innendurchmesser so zu wählen, daß er mindestens gleich dem größten Kabeldurchmesser ist. Durch die Stege ergibt sich eine weitere Verbesserung, als in die Stege eingewellt werden kann. Dadurch ergibt sich bei dieser Konstruktion ein verbesserter Kraftschluß, ein verbesserter elektrischer Kontakt und ein verbesserter Wärmeübergang zwischen der äußeren Leitschicht und dem gewellten Metallmantel. Durch Fixierung der Dichtungsringe in der Nut, hergestellt z. B. durch ein mitlaufendes rotierendes Messer während der Wellmantelfertigung, wird ein Querziehen der Ringe durch die Relativbewegung der Kabelseele im Glattrohr verhindert. Denn die Wellmantelfertigung besteht ja bekanntlich aus den Verfahrensschritten: Rohrformen eines längseinlaufenden Metallbandes um die Kabelseele — Verschweißen der Bandkanten — Wellen dieses so gebildeten Glattrohres.

6

0 015 369

Zur Erleichterung der Feststellung, ob im Fehlerfall an einer Stelle des Kabels Wasser vorhanden ist oder war, kann bei der Wellmantelfertigung ein längseinlaufendes Band mit eingefahren werden, das mit einem Indikator versehen ist, der mit Wasser, z. B. durch Verfärbung, reagiert.

Ein weiteres Ausführungsbeispiel nach der Erfindung ist in der Fig. 5 dargestellt. Hier ist der Leiter 30 von der inneren Leitschicht 31 überdeckt, die für einen Ausgleich der durch die Einzeldrähte gebildeten Unregelmäßigkeiten der Oberfläche sorgt. Diese innere Leitschicht 31 ist z. B. aufextrudiert, sie kann aus einem durch Ruß leitfähig gemachten Polyäthylen oder eines seiner Copolymere bestehen und vernetzbar sein. Über der inneren Leitschicht 31 befindet sich die Isolierung 32 z. B. aus einem vernetzbaren oder thermoplastischen Polyäthylen, dessen Wandstärke entsprechend der zu übertragenden Spannung ausgewählt ist. Mit 33 ist die die Isolierung überdeckende äußere Leitschicht bezeichnet, die vorteilhaft ebenfalls aus einem durch Ruß oder Graphit leitfähigen thermoplastischen Werkstoff besteht. Über dieser Leitschicht 33, die gegebenenfalls noch eine Polsterschicht z. B. aus einem leitfähigen Geweband und zusätzliche Schirmdrähte beinhalten kann, befindet sich beispielsweise die elastische Wendel 34, z. B. aus EPDM in einer Dicke von z. B. 4 mm, die wendelförmig aufgebracht ist und als Abstandshalterung für den hierzu konzentrischen Wellmantel 35 dient.

Der Wellmantel 35 weist im dargestellten Ausführungsbeispiel eine Parallelwellung auf, diese Wellung kann aber auch einen wendelförmigen Verlauf haben. Der zwischen dem Wellmantel 35 und der elastischen Wendel 34 gebildete Raum 36 dient zur Aufnahme des schäumenden Materials, das für eine Abschottung in Längsrichtung sorgt. Selbstverständlich können auch diesen Materialien spannungsstabilisierende Zusätze beigegeben werden, die im Laufe des Betriebes, insbesondere bei Temperaturerhöhung, aufgrund der zu übertragenden Energie in die darunter befindliche Isolierung eindiffundieren. Die geschlossene metallische Hülle ist umgeben von dem mechanisch widerstandsfähigen Kunststoffmantel 37 als äußerer Schutz.

Zur Herstellung eines in der Fig. 5 dargestellten Kabels geht man zweckmäßig so vor, daß auf den Leiter 30 zunächst die innere Leitschicht 31 und dann die Isolierung 32 aufextrudiert werden. Die äußere Leitschicht 33 wird ebenfalls durch Extrusion aufgebracht, und anschließend erfolgt das Aufwickeln der elastischen Wendel 34. Schließlich wird in bekannter Weise längseinlaufend ein Kupfer- oder Stahlband (Wellmantel 35) um die Seele rohrförmig herumgelegt, wobei vor dem Verschweißen der Bandkanten das noch in flüssiger Form vorliegende Komponentensystem eingebracht wird. Die Topfzeit ist dabei so gewählt, daß der Schäumvorgang sich erst an den Wellvorgang für das an den Kanten verschweißte Rohr anschließt. Das so vorbereitete Kabel durchläuft dann einen weiteren Extruder, mittels dem, gegebenenfalls nach Aufbringen eines zusätzlichen Korrosionsschutzes, der Außenmantel (Kunststoffmantel 37) aufgebracht wird.

Wie bereits angedeutet, kommt es bei der Fertigung des in der Fig. 5 dargestellten Kabels vor allem auch darauf an, daß der Schaum erst nach dem Verschweißen der Bandkanten und nach dem daraufhin erfolgenden Wellen der metallischen Hülle aufschäumt. Der Schaum muß also so eingestellt sein, daß er einerseits eine genügend lange Topfzeit, andererseits aber noch ausreichende Steigfähigkeit besitzt, um den sehr engen Spalt zwischen äußerer Leitschicht 33 und Wellmantel 35 auszufüllen. Diese Forderungen sind vom chemischen Mechanismus her gegenläufig, d. h. eine lange Topfzeit erfordert eine Inhibierung der Isocyanat/Polyol-Reaktion, diese muß aber so eng dosiert sein, daß die Steigfähigkeit nicht ebenfalls zu stark beeinträchtigt wird. Dies läßt sich in Durchführung der Erfindung durch ein Schäumsystem mit folgender Charakteristik erreichen:

| | |
|---|---|
| Topfzeit (Startzeit) | 35 sec |
| Miniskus (halbe Steighöhe) | 180 sec |
| Abbindezeit | 280 sec |
| Steigzeit | 300 sec |
| Klebfreiheit | 600 sec |

bei einem Mischungsverhältnis A : B, 2 : 1 und einem freigeschäumten Raumgewicht von etwa 60 kg/m$^3$.

Die Sichtprüfung bei einem fertigen Kabel ergab, daß der Hohlraum zwischen Seele und Wellenmantel 35, z. B. aus Kupfer, rundum ausgefüllt war. Die Haftung am Metallmantel und an der extrudierten äußeren Leitschicht 33 war ausreichend, Risse im Schaum bei Biegebeanspruchungen traten nicht auf.

Als für die Erfindung besonders geeignete Schäume kommen in Frage:

Beispiel I

Komponente A, ein Gemisch aus

| | |
|---|---|
| Polyol: | Reaktionsprodukt aus Äthylenoxid mit Trimethylolpropan |
| Treibmittel: | Wasser |

7

Katalysatoren:              tertiäre Amine, wie Dimethyläthanolamin, Triäthylamin, Triäthylendiamin oder Diazobicylooktan

Schaumstabilisatoren:     Polysiloxane

Komponente B:           Diphenylmethan-diisocyanat

### Beispiel II

Komponente A, ein Gemisch aus

Polyol:                 Reaktionsprodukt aus Äthylenoxid mit Glycerin und Propylenoxid mit Trimethylolpropan oder Äthylendiamin

Treibmittel:             Wasser in Verbindung mit niedrig siedenden Flüssigkeiten, z. B. Monofluortrichlormethan

Katalysatoren:           tertiäre Amine in Verbindung mit primären Metallsalzen, wie Dibutylzinndilaurat, Zinn-dioktoat

Schaumstabilisatoren:     Polysiloxane

Komponente B:           Diphenylmethandiisocyanat

Die in den Beispielen angeführten sind sogenannte halbharte Schäume, sie erreichen, in offener Form geschäumt, ein Raumgewicht von 60 kg/m³, bei überwiegend offenporigem Charakter. Wird dagegen, wie nach der Erfindung vorgesehen, dieser Schaum im Spalt zwischen äußerer Leitschicht und Mantel auf das Drei- oder Vierfache seines freigeschäumten Raumes verdichtet, dann steigt der Anteil geschlossener Zellen auf über 50% an, wobei trotz dieses nunmehr relativ hohen Raumgewichtes von z. B. 150 – 150 kg/m³ die geforderte Flexibilität erreicht wird.

Mischungsbeispiele von Werkstoffen mit für die Erfindung geeigneter Qualität der hieraus hergestellten Abstandswendel sind die folgenden:

### Beispiel I

| | |
|---|---|
| EPDM | 100 Teile |
| Ruß (Vulcan P) | 90 Teile |
| Ruß (Ketjenblack EC — BET Oberfläche > 900 m²/g) | 20 Teile |
| Weichmacher | 70 Teile |
| Verarbeitungshilfen | 10 Teile |
| Alterungsschutzmittel | 2 Teile |
| Peroxid | 7 Teile |
| Vernetzung | CV-Anlage |
| Reißfestigkeit | 9 N/mm² |
| Reißdehnung | 350% |
| Spezifischer Widerstand | 20 Ω · cm |

### Beispiel II

| | |
|---|---|
| EPDM | 100 Teile |
| Ketjenblack | 45 Teile |
| Graphit | 120 Teile |
| Verarbeitungshilfe | 6 Teile |
| Weichmacher | 60 Teile |
| Alterungsschutzmittel | 2 Teile |
| Peroxid | 7 Teile |
| Vernetzung | CV-Anlage |
| Reißfestigkeit | 6 N/mm² |
| Reißdehnung | 100% |
| Spezifischer Widerstand | 5 Ω · cm |

### Beispiel III

| | |
|---|---|
| EPDM | 100 Teile |
| Graphit | 125 Teile |

# 0 015 369

| | |
|---|---|
| Weichmacher | 20 Teile |
| Verarbeitungshilfe | 4 Teile |
| Alterungsschutzmittel | 2 Teile |
| Vernetzungstechnik | drucklose Feuchtigkeitsvernetzung (Siloxantechnik) |
| Reißfestigkeit | 6 N/mm² |
| Dehnung | 200% |
| Spezifischer Widerstand | 100 Ω · cm |

## Beispiel IV

| | |
|---|---|
| CM (chloriertes Polyäthylen) | 100 Teile |
| Ketjenblack EC | 30 Teile |
| Weichmacher | 30 Teile |
| Verarbeitungshilfe | 20 Teile |
| Stabilisator | 8 Teile |
| Peroxid | 7 Teile |
| Vernetzung | CV-Technik |
| Reißfestigkeit | 15 N/mm² |
| Reißdehnung | 450% |
| Spezifischer Widerstand | 15 Ω · cm |

## Patentansprüche

1. Gegen Feuchtigkeit geschütztes elektrisches kunststoffisoliertes Energiekabel, insbesondere für Hochspannung, mit einer die Isolierung (3; 22; 32) und eine darüber befindliche äußere Leitschicht (4; 23; 33) umgebenden geschlossenen gewellten metallischen Hülle (5; 27; 35), die über Abstand zur äußeren Leitschicht (4; 23; 33) haltende Elemente mit dieser in elektrischem Kontakt steht, dadurch gekennzeichnet, daß die gewellte metallische Hülle (5; 27; 35) aus einem längseinlaufend zum Rohr geformten, an den Kanten verschweißten und anschließend gewellten Metallband besteht, und daß sich diese selbsttragende Hülle (5; 27; 35) über die äußere Leitschicht (4; 23; 33) ring- oder wendelförmig umgebende, gleichzeitig als Dichtelemente wirkende Abstandshalter (9; 25; 34) aus einem gummielastischen Material in Abständen abstützt.

2. Energiekabel nach Anspruch 1, dadurch gekennzeichnet, daß die mit der äußeren Leitschicht (4; 23) ringförmige Hohlräume bildenden Wellentäler der gewellten metallischen Hülle (5; 27) zur Aufnahme von Dichtringen (9; 25) dienen.

3. Energiekabel nach Anspruch 1 mit einem Wellmantel (35) mit wendelförmig verlaufender Wellung, dadurch gekennzeichnet, daß als Dichtungselement und gleichzeitig zur Abstandshalterung zwischen Wellmantel (35) und äußerer Leitschicht (33) eine Wendel (34) aus einem gummielastischen Werkstoff mit einer elektrischen Leitfähigkeit von mindestens $10^{-4}$ S · cm$^{-1}$ dient.

4. Energiekabel nach Anspruch 3, dadurch gekennzeichnet, daß die Banddicke der gummielastischen Abstandswendel (34) mindestens 1,0 mm, vorzugsweise 1,5 bis 4,5 mm, beträgt.

5. Energiekabel nach Anspruch 3, dadurch gekennzeichnet, daß der zwischen der geschlossenen Hülle (35) und den Windungen der Wendel (34) gebildete freie Raum durch einen kontinuierlich oder in Abständen eingebrachten Schaum ausgefüllt ist.

6. Energiekabel nach Anspruch 5, dadurch gekennzeichnet, daß als Werkstoff für die gummielastische Wendel (34) ein Äthylen-Propylen-Kautschuk (EPDM) oder ein chloriertes Polyäthylen (CM) in vernetzter oder unvernetzter Form verwendet ist.

7. Energiekabel nach Anspruch 1 oder 2, dadurch gekennzeichnet, daß als gummielastische Materialien solche auf Basis Acrylnitrilbutadien-Kautschuk in vernetzter oder unvernetzter Form dienen.

8. Energiekabel nach Anspruch 7, dadurch gekennzeichnet, daß die gummielastischen Materialien leitfähig sind.

9. Energiekabel nach einem der Ansprüche 2, 7, 8, dadurch gekennzeichnet, daß die Dichtringe (9; 25) eine Härte von 40 – 80 Shore, vorzugsweise 60 – 70 Shore, aufweisen.

10. Energiekabel nach einem der Ansprüche 2, 7 bis 9, dadurch gekennzeichnet, daß die Dichtringe (25) auf der äußeren Leitschicht (23) durch ein- oder beidseitig angeordnete und über den Umfang der Isolierung (22) wirkende Widerlager arretiert sind.

11. Energiekabel nach Anspruch 3, dadurch gekennzeichnet, daß zur Abdichtung ein halbhartes, überwiegend geschlossenporiges, bei freier Schäumung schrumpfendes Polyurethan-Schaumsystem in auf 100 – 300 kg/m³, vorzugsweise 150 – 250 kg/m³, verdichteter Form verwendet wird.

12. Energiekabel nach Anspruch 11, dadurch gekennzeichnet, daß als Komponente A ein Reaktionsprodukt auf Basis Äthylenoxid und/oder Propylenoxid mit Verbindungen, die mindestens

9

zwei oder drei aktive Wasserstoffatome enthalten, verwendet wird, mit einem Molekulargewicht von 3000 – 6000.

13. Energiekabel nach Anspruch 12, dadurch gekennzeichnet, daß als Verbindungen mit aktiven Wasserstoffatomen Trimethylolpropan, Glycerin, Äthylendiamin u. a. dienen.

14. Energiekabel nach einem der Ansprüche 11 bis 13, dadurch gekennzeichnet, daß als Komponente B ein Diphenylmethandiisocyanat verwendet ist.

15. Energiekabel nach einem der Ansprüche 11 bis 14, dadurch gekennzeichnet, daß als Treibmittel Wasser allein oder in Verbindung mit niedrig siedenden Flüssigkeiten, wie z. B. Monofluortrichlormethan, verwendet ist.

16. Energiekabel nach einem der Ansprüche 11 bis 15, dadurch gekennzeichnet, daß der Anteil an geschlossenen Zellen im Schaumsystem 50 – 80% beträgt.

17. Verfahren zur Herstellung eines Kabels nach Anspruch 2, dadurch gekennzeichnet, daß unmittelbar vor der Umhüllung der Kabelseele (10) mit dem sich zum Rohr formenden längseinlaufenden Metallband die Dichtringe (9) auf die durchlaufende Seele in Abständen nacheinander aufgeschoben, vom Metallband umschlossen und beim an das Verschweißen der Bandkanten anschließenden Wellvorgang in die entstehenden Wellentäler eingedrückt werden.

18. Verfahren nach Anspruch 17, dadurch gekennzeichnet, daß das Metallband mindestens im Bereich der vorzunehmenden Schweißnaht mit Abstand zu den Dichtungsringen (9) zum Rohr geformt wird und nach dem Schweißen eine Kalibirierung erfolgt.

19. Verfahren nach Anspruch 17 oder 18, dadurch gekennzeichnet, daß die Wellung der Umhüllung nach der Stationierung der Dichtungsringe (9) kalibriert wird.

20. Verfahren nach Anspruch 19, dadurch gekennzeichnet, daß bei der Kalibirierung eine Querschnittsverformung der Dichtringe (9) von 5 – 20%, vorzugsweise 10 – 12%, erfolgt.

21. Vorrichtung zur Durchführung des Verfahrens nach einem der Ansprüche 17 bis 20, gekennzeichnet durch ein rohrförmiges Magazin (12) für die Dichtringe (9), durch das die Kabelseele (10) hindurchführbar ist (Fig. 3).

22. Vorrichtung nach Anspruch 21, dadurch gekennzeichnet, daß das rohrförmige Magazin (12) einlaufseitig trompetenförmig aufgeweitet ist.

## Claims

1. Moisture-protected, plastic-insulated power cable, especially for high voltages, with a closed, corrugated metallic sheath (5; 27; 35), which surrounds the insulation (3; 22; 32), and an outer conducting layer (4; 23; 33), which is located over this insulation, the metallic sheath being in electrical contact with the outer conducting layer (4; 23; 33) via elements which hold it at a distance from this conducting layer, characterised in that the corrugated metallic sheath (5; 27; 35) is composed of a metal strip, which is formed, as it runs in longitudinally, into a tube, si welded together at the edges, and is thereafter corrugated, and in that this self-supporting sheath (5; 27; 35) rests over the distance-elements (9; 25; 34), which are made of a rubber-elastic material, surround the outer conducting layer (4; 23; 33) in an annular or spiral arrangement, and simultaneously act as sealing elements.

2. Power cable according to claim 1, characterised in that the valleys of the corrugated metallic sheath (5; 27) which, with the outer conducting layer (4; 23), form annular cavities, serve to receive sealing rings (9; 25).

3. Power cable according to claim 1, with a corrugated sheath (35) having a corrugation which runs spirally, characterised in that a spiral (34), composed of a rubber-elastic material which has an electrical conductivity of at least $10^{-4}$ S · $cm^{-1}$, simultaneously serves as a sealing element and as a distance-element between the corrugated sheath (35) and the outer conducting layer (33).

4. Power cable according to claim 3, characterised in that the thickness of the strip forming the rubber-elastic distance-spiral (34) is at least 1.0 mm preferably 1.5 to 4.5 mm.

5. Power cable according to claim 3, characterised in that the open space between the closed sheath (35) and the turns of the spiral (34) is filled by a foam, which is introduced either contisuously or at intervals.

6. Power cable according to claim 5, characterised in that an ethylene/propylene rubber (EPDM) or a chlorinated polyethylene (CM), in either a cross-linked form, or in a form which has not been cross-linked, is used as the material for the rubber-elastic spiral (34).

7. Power cable according to claim 1 or 2, characterised in that materials based on acrylonitrile/butadiene rubber, in cross-linked form, or in a form which has not been cross-linked, serve as the rubber-elastic materials.

8. Power cable according to claim 7, characterised in that the rubber-elastic materials are conductive.

9. Power cable according to one of the claims 2, 7 or 8, characterised in that the sealing rings (9; 25) have a Shore Hardness of 40 – 80, preferably 60 – 70.

10. Power cable according to one of the claims 2 and 7 to 9, characterised in that the sealing rings (25) on the outer conducting layer (23) are prevented from moving by abutment-features, which are located on one side, or on both sides, and which act over the periphery of the insulation (22).

11. Power cable according to claim 3, characterised in that a semi-hard polyurethane foam system, in which closed porosity predominates and which shrinks on being freely foamed, is used in a form in which it has been compressed to 100 − 300 kg/m³, preferably to 150 − 250 kg/m³.

12. Power cable according to claim 11, characterised in that a reaction product of ethylene oxide and/or propylene oxide with compounds containing at least two or three active hydrogen atoms is used as Component A, this reaction product having a molecular weight of 3000 − 6000.

13. Power cable according to claim 12, characterised in that trimethylolpropane, glycerol, ethylene diamine, and others, serve as compounds with active hydrogen atoms.

14. Power cable according to one of claims 11 to 13, characterised in that a diphenylmethane diisocyanate is used as Component B.

15. Power cable according to one of claims 11 to 14, characterised in that water is used as the foaming agent, either on its own, or in combination with low-boiling liquids, such as, e. g. monofluorotrichloromethane.

16. Power cable according to one of claims 11 to 15, characterised in that, in the foam system, the proportion of closed cells is 50 − 80%.

17. Process for manufacturing a cable according to claim 2, characterised in that, immediately before the operation of sheathing the cable-core (10) with the metal strip, running in longitudinally and forming itself into a tube, the sealing rings (9) are pushed, at intervals, one after another, onto the core which is running through, are surrounded by the metal strip, and are pressed into the valleys of the corrugations forming during the corrugating operation which follows the welding-together of the edges of the strip.

18. Process according to claim 17, characterised in that, at least in the region of the weld-seam which is to be produced, the metal strip is formed into a tube which exhibits a clearance relative to the sealing rings (9), and a sizing operation is carried out after the welding process.

19. Process according to claim 17 or 18, characterised in that the corrugation of the sheath is subjected to a sizing operation after the sealing rings (9) have been placed in position.

20. Process according to claim 19, characterised in that, during the sizing operation, the sealing rings (9) are subjected to a cross-sectional deformation of 5 − 20%, preferably 10 − 12%.

21. Appliance for carrying out the process according to one of claims 17 to 20, characterised by a tubular magazine (12) for the sealing rings (9), it being possible to lead the cable-core (10) through this magazine (Fig. 3).

22. Appliance according to claim 21, characterised in that the tubular magazine (12) is widened, on the inlet side, in a trumpet-like shape.

**Revendications**

1. Câble électrique pour la transmission d'énergie, isolé à la matière plastique et protégé contre l'humidité, notamment câble pour haute tension, avec une gaine métallique (5, 27, 35) ondulée et fermée, entourant l'isolation (3, 22, 32) et une couche conductrice externe (4, 23, 33) se trouvant par dessus, cette gaine étant en contact électrique avec la couche conductrice externe (4, 23, 33) par l'intermédiaire d'éléments la maintenant à une certaine distance de cette couche conductrice, câble caractérisé en ce que la gaine métallique ondulée (5, 27, 35) est constituée d'une bande métallique formée longitudinalement en continu pour constituer un tube, soudée sur ses bords, et ensuite ondulée, cette gaine auto-portante (5, 27, 35) prenant appui à intervalles par l'intermédiaires d'entretoises (9, 25, 34) en un matériau présentant l'élasticité du caoutchouc, qui entourent sous forme d'anneaux ou sous forme d'hélices, la couche externe conductrice (4, 23, 33) et interviennent en même temps comme éléments d'étanchement.

2. Câble de transmission d'énergie selon la revendication 1, caractérisé en ce que les creux d'ondulation de la gaine métallique ondulée (5, 27), délimitant avec la couche conductrice externe (4, 23) des espaces creux annulaires, sont utilisés pour recevoir des anneaux d'étanchement (9, 25).

3. Câble de transmission d'énergie selon la revendication 1, avec une enveloppe ondulée (35) comportant une ondulation s'étendant en forme d'hélice, caractérisé en ce qu'une hélice (34) en un matériau présentant l'élasticité du caoutchouc avec une conductibilité électrique d'au moins 10⁻⁴ S · cm⁻¹ sert d'élément d'étanchement et simultanément à maintenir un invervalle entre l'enveloppe ondulée (35) et la couche conductrice externe (33).

4. Câble de transmission d'énergie selon la revendication 3, caractérisé en ce que l'épaisseur de bande de l'hélice-entretoise (34) présentant l'élasticité du caoutchouc est au moins de 1,0 mm, de préférence de 1,5 à 4,5 mm.

5. Câble de transmission d'énergie selon la revendication 3, caractérisé en ce que l'espace libre ménagé entre la gaine fermée (35) et les spires de l'hélice, (34), est rempli par une mousse introduite en continue ou à intervalles.

6. Câble de transmission d'énergie selon la revendication 5, caractérisé en ce que, comme matériau pour l'hélice (34) présentant l'élasticité du caoutchouc, on utilise un caoutchouc d'éthylène-propylène (EPDM) ou bien un polyéthylène chloré (CM) sous une forme réticulée ou non réticulée.

7. Câble de transmission d'énergie selon l'une quelconque des revendications 1 et 2, caractérisé en ce que, comme matériaux présentant l'élasticité du caoutchouc, on utilise des matériaux à base de caoutchouc d'acrylnitrile butadiène sous une forme rériculée ou non réticulée.

8. Câble de transmission d'énergie selon la revendication 7, caractérisé en ce que les matériaux présentant l'élasticité du caoutchouc sont conducteurs.

9. Câble de transmission d'énergie selon l'une quelconque des revendications 2, 7, 8, caractérisé en ce que les anneaux d'étanchement (9, 25) présentent une dureté de 40 à 80 Shore, de préférence de 60 à 70 shore.

10. Câble de transmission d'énergie selon l'une quelconque des revendications 2, 7 à 9, caractérisé en ce que les anneaux d'étanchement (25) sont arrêtés sur la couche conductrice externe (23) par des contre-appuis disposés d'un côté ou des deux côtés, et qui agissent sur l'étendue de la périphérie de l'isolation (22).

11. Câble de transmission d'énergie selon la revendication 3, caractérisé en ce que pour l'étanchement, on utilise, sous une forme comprimée à $100-300$ kg/m$^3$, de préférence $150-250$ kg/m$^3$, une mousse de polyuréthane demi dur, comportant principalement des pores fermés et se rétractant lorsqu'il mousse librement.

12. Câble de transmission d'énergie selon la revendication 11, caractérisé en ce que, comme composant A, on utilise un produit de réaction à base d'oxyde d'éthylène et/ou d'oxyde de propylène avec des liaisons qui contiennent au moins deux ou trois atomes actifs d'hydrogène, avec un poids moléculaire de $3000-6000$.

13. Câble de transmission d'énergie selon la revendication 12, caractérisé en ce que, comme liaison avec des atomes actifs d'hydrogène, on utilise entre autres, le triméthylolpropane, la glycérine, l'éthylène diamine.

14. Câble de transmission d'énergie selon l'une quelconque des revendications 11 à 13, caractérisé en ce que, comme composant B, on utilise un diisocyanate de diphénylméthane.

15. Câble de transmission d'énergie selon l'une quelconque des revendications 11 à 14, caractérisé en ce que, comme agent d'attaque, on utilise de l'eau pure ou bien en combinaison avec des liquides à bas point d'ébullition, comme par exemple du monofluortrichlorméthane.

16. Câble de transmission d'énergie selon l'une quelconque des revendications 11 à 15, caractérisé en ce que la fraction de cellules fermées dans le système moussant, est de 50 à 80%.

17. Procédé pour la réalisation d'un câble selon la revendication 2, caractérisé en ce que, immédiatement avant le gainage de l'âme (10) du câble, avec la bande métallique prenant longitudinalement en continu la forme d'un tube, les anneaux d'étanchement (9) sont enfilés à intervalles les uns à la suite des autres sur l'âme du câble, sont enfermés dans la bande métallique et lors du processus d'ondulation succédant à la soudure des bords de la bande, sont introduits de force dans les creux d'ondes prenant naissance.

18. Procédé selon la revendication 17, caractérisé en ce que la bande métallique est conformée en forme de tube en conservant, au moins dans la zone du cordon de soudure prévu, un certain intervalle par rapport aux anneaux d'étanchement (9) et subit après la soudure un calibrage.

19. Procédé selon l'une quelconque des revendications 17 et 18, caractérisé en ce que l'ondulation de la gaine est calibrée après la stabilisation des anneaux d'étanchement (9).

20. Procédé selon la revendication 19, caractérisé en ce que lors du calibrage, il s'effectue une déformation de la section transversale des anneaux d'étanchement (9) de 5 à 20%, de préférence de 10 à 12%.

21. Dispositif pour la mise en oeuvre du procédé selon l'une quelconque des revendications 17 à 20, caractérisé en ce qu'il comporte un magasin tubulaire (12) pour les anneaux d'étanchement (9), magasin à travers lequel l'âme (10) du câble est susceptible d'être guidée (figure 3).

22. Dispositif selon la revendication 21, caractérisé en ce que le magasin tubulaire (12) est élargi côté entrée, en forme de trompette.

Fig.1

Fig2

Fig.3

Fig.5

1/4

Fig.4

20

21

22

23

24

25

26

27

28

29